# EUROPÄISCHE PATENTANMELDUNG

(11) **EP 2 108 931 A2**
(43) Veröffentlichungstag der Anmeldung: **14.10.2009**
(21) Anmeldenummer: 09003588.2
(22) Anmeldetag: 12.03.2009
(51) Int. Cl.: G01K 11/32, G01K 15/00

(54) **Vorrichtung und Verfahren zur Kalibrierung eines faseroptischen Temperaturmesssystems**

(30) Priorität: 07.04.2008 DE 102008017740
(71) Anmelder: LIOS Technology GmbH, 51063 Köln (DE)
(72) Erfinder: Hill, Wieland, Dr., 51519 Odenthal (DE); Kübler, Jochen, 51061 Köln (DE); Fromme, Martin, 51069 Köln (DE)
(74) Vertreter: Basfeld, Rainer

(57) **Zusammenfassung**

Vorrichtung zur Kalibrierung eines faseroptischen Temperaturmesssystems, umfassend eine breitbandige Lichtquelle (5), Einkoppelmittel, die von der Lichtquelle (5) erzeugtes Licht (6) zur Kalibrierung in eine Lichtleitfaser (9) des Temperaturmesssystems einkoppeln können, Auskoppelmittel, die in der Lichtleitfaser (9) zurück gestreute Anteile des von der Lichtquelle (5) erzeugten Lichts (6) aus der Lichtleitfaser (9) auskoppeln können, sowie Auswertemittel (12), die auf Basis der zurück gestreuten Anteile (13) des Lichts (6) der Lichtquelle (5) eine Kalibrierung des Temperaturmesssystems vornehmen können.

## Beschreibung

Die vorliegende Erfindung betrifft eine Vorrichtung zur Kalibrierung eines faseroptischen Temperaturmesssystems gemäß dem Oberbegriff des Anspruchs 1 sowie ein Verfahren zur Kalibrierung eines faseroptischen Temperaturmesssystems.

Faseroptische Temperaturmesssysteme (Distributed Temperature Sensing - DTS) können optische Effekte in Lichtleitfasern zur ortsaufgelösten Temperaturmessung nutzen. Beispielsweise kann der Effekt der Raman-Streuung genutzt werden. Hierbei wird die Strahlung einer schmalbandigen Quelle elektromagnetischer Strahlung (z.B. die eines Lasers) inelastisch im Fasermaterial gestreut. Das Verhältnis der Intensitäten der Streustrahlung mit kürzerer Wellenlänge als die Anregung (anti-Stokes-Streustrahlung) und der Streustrahlung bei längerer Wellenlänge (Stokes-Streustrahlung) ist temperaturabhängig und kann zur Temperaturbestimmung verwendet werden. Durch Nutzung von Frequenztechniken (Optical Frequency-Domain Reflectometry - OFDR), wie sie in der EP 0 692 705 A1 und in der EP 0 898 151 A2 beschrieben sind, oder von Pulstechniken (Optical Time-Domain Reflectometry - OTDR) kann die Temperatur entlang der Faser ortsaufgelöst bestimmt werden. Derartige Temperaturmesssysteme können beispielsweise zur Brandüberwachung in Tunneln und Kanälen, zur Überwachung von Energiekabeln und Pipelines sowie bei der Öl- und Gasförderung eingesetzt werden.

Ein grundlegendes Problem der ortsaufgelösten Temperaturmessung in Lichtleitfasern ist die Dämpfung der Strahlung bei Transport entlang der Faser. Die anregende Strahlung wird entlang der Faser gedämpft. Dies reduziert die Streuintensitäten und damit das Signal/Rausch-Verhältnis der Messung und begrenzt letztendlich die maximale Entfernung beziehungsweise die Auflösung solch einer Temperaturmessung. Die Dämpfung der Anregungsstrahlung wirkt sich gleichartig auf die anti-Stokes- und Stokes-Anteile des Streulichts aus und hat daher abgesehen vom Rauschanteil keinen Einfluss auf das Ergebnis der Temperaturberechnung anhand der bekannten Formeln.

Anders verhält es sich mit den anti-Stokes- und Stokes-Anteilen des Streulichts. Diese Anteile weisen unterschiedliche Wellenlängen auf, bei denen das Fasermaterial eine unterschiedliche Dämpfung hervorrufen kann. Dieser Dämpfungsunterschied verändert das gemessene Intensitätsverhältnis gegenüber dem durch die lokale Temperatur am Ort der Streuung bestimmten Verhältnis. Daher ist der Dämpfungsunterschied bei der Temperaturberechnung zu berücksichtigen.

Die Dämpfungen der vorliegenden Fasern bei den anti-Stokes- und Stokes-Wellenlängen sind in der Regel nicht ausreichend genau bekannt. Dis Fasern weisen zwar bestimmte Spezifikationen bezüglich der Dämpfung auf und es werden auch Dämpfungswerte einzelner Faserchargen vermessen. Diese Spezifikationen und Messwerte liegen allerdings in der Regel nicht für die in der ortsaufgelösten Temperaturmessung benutzten Wellenlängen vor. Außerdem ist nicht bei jeder Faserinstallation genau bekannt, aus welcher Charge die Fasern stammen. Weiterhin führen Verbindungsstellen, Stecker, Spannungen und die Biegung der Faser zu zusätzlichen Dämpfungen. Selbst nach der Installation einer Faser kann sich deren Dämpfung durch mechanische, thermische oder chemische Belastungen noch verändern. Schließlich ist die Dämpfung der Fasern auch noch von der aktuellen lokalen Temperatur abhängig.

Wegen der vielfältigen Einflüsse auf die Faserdämpfung und deren Bedeutung für die korrekte Ermittlung der lokalen Temperaturen sind Messungen der aktuellen Dämpfungen entlang der für die Messungen verwendeten optischen Fasern insbesondere für besonders genaue Temperaturmessungen und für Messungen in sehr langen Fasern wünschenswert.

Ein Ansatz zur Bestimmung der Dämpfung in den Fasern besteht in der Anwendung kommerzieller OTDR-Geräte. Diese senden einen Laserpuls in die Faser, messen die Rayleigh-Rückstreuung zeitaufgelöst und bestimmen die Dämpfung aus der Rückstreukurve. Diese Geräte sind allerdings nur für wenige Standardwettenlängen der Telekommunikation verfügbar und in der Regel nicht für die anti-Stokes und Stokes-Wellenlängen. Außerdem würden dann zwei oder drei Geräte für die Temperaturmessung benötigt, nämlich ein oder zwei OTDR-Geräte für die Messung der Dämpfung auf beiden Wellenlängen sowie das DTS-Gerät. Weiterhin ist das schmalbandige Laserlicht eines OTDR-Geräts nicht repräsentativ für das eher breitbandige Raman-Streulicht.

Eine Vorrichtung und ein Verfahren der eingangs genannten Art werden in der W02007/106827 beschrieben. Dort wird zur Kalibrierung eines DTS-Geräts ein zweiter Laser eingesetzt, dessen Stokes-Wellenlänge mit der anti-Stokes-Wellenlänge des ersten Lasers übereinstimmt. Das Stokes-Signal des zweiten Lasers wird zur Kalibrierung der Dämpfung bei der anti-Stokes-Wellenlänge des ersten Lasers eingesetzt. Allerdings ist diese Kalibrierung nicht unabhängig beziehungsweise eindeutig, weil die beobachtete Dämpfung der Stokes-Intensität des ersten Lasers die Summe der Dämpfung der Laserintensität auf dem Hinweg und der Dämpfung der Stokes-Intensität auf dem Rückweg ist. Außerdem erfordert dieser Aufbau den Einsatz eines aufwändigen zweiten Lasers und es erfolgt keine Kalibrierung bei der Stokes-Wellenlänge des ersten Lasers

Das der vorliegenden Erfindung zugrunde liegende Problem ist die Schaffung einer Vorrichtung der eingangs genannten Art, die effektiver ist. Weiterhin soll ein Verfahren der eingangs genannten Art angegeben werden.

Dies wird hinsichtlich der Vorrichtung durch eine Vorrichtung der eingangs genannten Art mit den kennzeichnenden Merkmalen des Anspruchs 1 sowie hinsichtlich des Verfahrens durch ein Verfahren der eingangs genannten Art mit den Merkmalen des Anspruchs 13 erreicht. Die Unteransprüche betreffen bevorzugte Ausgestaltungen der Erfindung.

Gemäß Anspruch 1 ist vorgesehen, dass die Lichtquelle eine breitbandige Lichtquelle ist. Solch eine Lichtquelle kann beispielsweise eine Superlumineszenzdiode (SLED) sein. Derartige Dioden sind ähnlich aufgebaut wie ein Halbleiterlaser, weisen allerdings keinen Resonator auf. Inzwischen sind in eine optische Faser einkoppelbare SLED verfügbar, die Bandbreiten im Bereich von 100 nm und Leistungen von mehreren mW aufweisen. Damit kann der gesamte für die faseroptische Temperaturmessung relevante Wellenlängenbereich abgedeckt werden und die Leistung ist vollkommen ausreichend für eine Messung der Faserdämpfung mittels der Rayleigh-Streuung.

Dabei kann vorteilhaft sein, dass - abgesehen von der Lichtquelle und den Ein- und/oder Auskoppelmitteln - der gleiche Messaufbau wie bei der Temperaturmessung selbst benutzt werden kann. Außerdem ist das Spektrum der breitbandigen Lichtquelle dem der Raman-Streuung wesentlich ähnlicher als das einer Laserquelle. Das hat den Vorteil, dass sich Eigenschaften des Temperaturmesssystems wie Filterdurchlasskurven, Nichtlinearität der Detektoren und Verstärker, zeitliche Responsekurven, sowie Untergrund- und Störsignale in ähnlicher Weise auf die Kalibriermessung und auf die Temperaturmessung auswirken. Solche Eigenschaften können somit durch die Kalibrierung gleich mit kompensiert werden. Diese Kompensation kann sogar individuelle Eigenschaften des jeweiligen Geräts mit erfassen, wenn für Kalibrierung und Temperaturmessung dasselbe Messsystem verwendet wird.

Der Vorrichtung zur Kalibrierung kann sowohl als eigenständiges Gerät realisiert werden, als auch in das Temperaturmesssystem selbst integriert werden. Für die Integration können geometrische Koppelmittel zur wechselweisen verlustarmen Einkopplung von Messlaser und Lichtquelle oder auch ein (faseroptischer) Schalter vorteilhaft eingesetzt werden. Die in das Temperaturmesssystem integrierte Kalibrierung ist erforderlich, wenn sich Faserdämpfungen beispielsweise aufgrund chemischer Einflüsse wie H₂S in der Ölförderung relativ rasch verändern. Die Ausführung der Vorrichtung als eigenständiges Gerät ist sinnvoll, wenn nur geringe zeitliche Veränderungen der Dämpfung erwartet werden und um die Kosten des eigentlichen Messgeräts niedrig zu halten.

Besonders vorteilhaft sind SLED-Strahlungsquellen für die Kalibrierung von OFDR-DTS. Die SLED sind in ähnlicher Weise wie der für die für die Temperaturmessung eingesetzten Halbleiterlaser modulierbar und weisen bei den typischerweise geringen Spitzenleistungen eine praktisch unbegrenzte Lebensdauer auf. Natürlich sind derartige Lichtquellen auch in Verbindung mit OTDR-CTS einsetzbar. Allerdings sind bei den hohen Spitzenleistungen ähnliche Verschleißerscheinungen wie bei den eingesetzten Pulslasern zu erwarten.

Eine einfache Einkopplung der breitbandigen Lichtquelle und Auskopplung der aus der Faser zurück gestreuten Strahlung zu den Detektoren kann über einen breitbandigen Strahlteiler erfolgen. Allerdings geht hierbei in der Regel sowohl bei der Ein- als auch bei der Auskopplung jeweils die Hälfte der Strahlungsleistung verloren. Dies könnte für die Kalibrierung akzeptabel sein, ist aber auf jeden Fall nachteilig, wenn derselbe Strahlteiler auch für die Einkopplung des Messlasers benutzt wird.

Alternativ zum Strahlteiler kann - zumindest bei Messsystemen mit Multimode-Sensorfaser - vorteilhaft eine geometrische Kopplung benutzt werden. Dabei ergibt sich eine effiziente Ein- und Auskopplung mit geringen Verlusten.

Das Verfahren gemäß Anspruch 13 sieht folgende Verfahrensschritte vor:
- Erzeugung von breitbandigem Licht,
- Einkoppeln des Lichts in eine Lichtleitfaser des Temperaturmesssystems,
- Auskoppeln von in der Lichtleitfaser zurück gestreuten Anteilen des Lichts aus der Lichtleitfaser,
- Auswerten der zurück gestreuten Anteile des Lichts,
- Kalibrierung des Temperaturmesssystems auf Basis der Auswertung.

Dabei kann für die Durchführung des Verfahrens eine erfindungsgemäße Vorrichtung verwendet werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: den Vergleich eines Emissionsspektrums einer Superlumineszenzdiode mit dem Raman-Spektrum einer Lichtleitfaser nach Anregung durch einen Messlaser (Intensität in willkürlichen Einheiten gegen Wellenlänge in willkürlichen Einheiten);
- Fig. 2: eine schematische Ansicht einer ersten Ausführungsform einer erfindungsgemäßen Vorrichtung;
- Fig. 3: eine schematische Ansicht eines Details einer zweiten Ausführungsform einer erfindungsgemäßen Vorrichtung;
- Fig. 4: eine schematische Ansicht eines Details einer dritten Ausführungsform einer erfindungsgemäßen Vorrichtung.

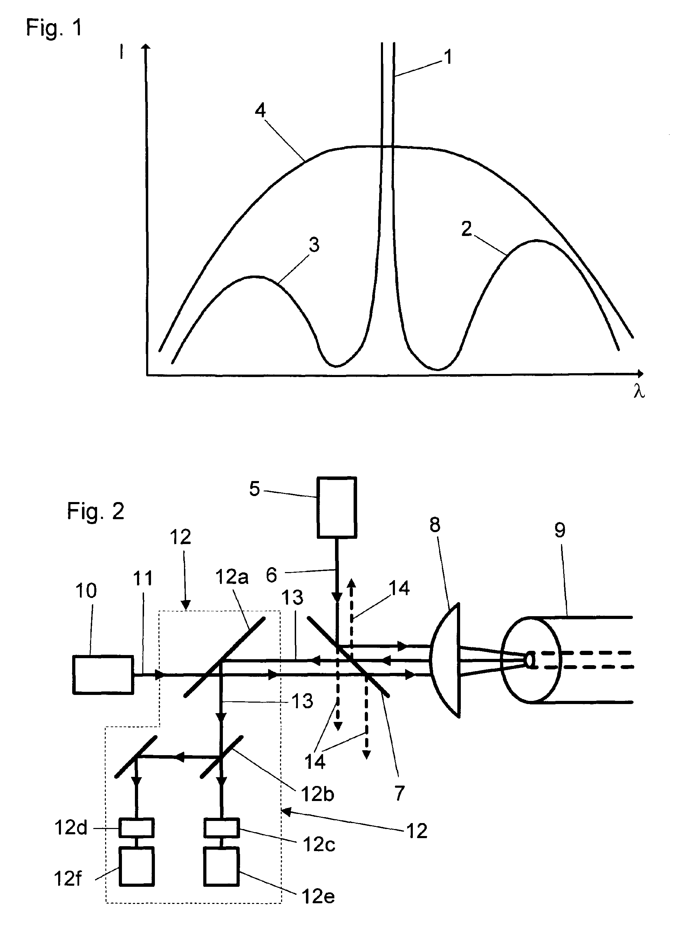

Aus Fig. 1 ist das Raman-Spektrum einer Lichtleitfaser nach Anregung durch einen Messlaser ersichtlich. Dabei ist mit 1 das Rayleigh-Streulicht bezeichnet, dessen Wellenlänge derjenigen des Messlasers entspricht. Mit 2 sind die Stokes-Streustrahlung und mit 3 die anti-Stokes-Streustrahlung bezeichnet. Eine typische Wellenlänge des Messlasers ist 980 nm, wobei sich dann das Stokes-Raman-Band bis zu einer Wellenlänge von etwa 1020 nm und das anti-Stokes-Raman-Band bis zu einer Wellenlänge von 940 nm erstrecken können. Eine weitere typische Wellenlänge des Messlasers ist 1064 nm, wobei sich dann das Stokes-Raman-Band bis zu einer Wellenlänge von etwa 1110 nm und das anti-Stokes-Raman-Band bis zu einer Wellenlänge von 1020 nm erstrecken können. Eine weitere typische Wellenlänge des Messlasers ist 1550 nm, wobei sich dann das Stokes-Raman-Band bis zu einer Wellenlänge von etwa 1650 nm und das anti-Stokes-Raman-Band bis zu einer Wellenlänge von 1460 nm erstrecken können.

Weiterhin ist in Fig. 1 das Emissionsspektrum 4 einer typischen Superlumineszenzdiode eingezeichnet. Es ist deutlich ersichtlich, dass dieses Emissionsspektrum 4 Anteile sowohl im Bereich der Stokes-Streustrahlung 2, als auch im Bereich der anti-Stokes-Streustrahlung 3 aufweist. Dabei ist die Bandbreite des Lichts der Superlumineszenzdiode größer als die der Stokes-Streustrahlung 2 und/oder der anti-Stokes-Streustrahlung 3. Insbesondere weist das Emissionsspektrum 4 der Superlumineszenzdiode sowohl Anteile, die langwelliger sind als die langwelligsten der Stokes-Streustrahlung 2, als auch Anteile auf, die kurzwelliger sind als die kurzwelligsten der anti-Stokes-Streustrahlung 3. Das Emissionsspektrum 4 deckt somit die spektralen Bereiche der Stokes-Streustrahlung 2 und der anti-Stokes-Streustrahlung 3 gut ab und ist dem Raman-Spektrum vergleichsweise ähnlich. Dies gilt insbesondere für die Spektralbereiche, die die im Nachfolgenden noch detaillierter beschriebenen Bandpassfilter vor den ebenfalls noch zu beschreibenden Detektoren passieren können.

Die in Fig. 2 abgebildete Ausführungsform einer erfindungsgemäßen Vorrichtung umfasst eine als Superlumineszenzdiode ausgebildete breitbandige Lichtquelle 5, die von nicht abgebildeten Ansteuermitteln angesteuert werden kann. Das Licht 6 der Lichtquelle 5 wird über Einkoppelmittel, die einen breitbandigen Strahlteiler 7 und eine Linse 8 umfassen, in eine zur Temperaturmessung verwendete Lichtleitfaser 9 des Temperaturmesssystems eingekoppelt.

Das Temperaturmesssystem umfasst neben der Lichtleitfaser 9 einen Messlaser 10, dessen Licht 11 ebenfalls über den Strahlteiler 7 und die Linse 8 in die Lichtleitfaser 9 eingekoppelt werden kann. Weiterhin umfasst das Temperaturmesssystem schematisch angedeutete Auswertemittel 12. Bei dem Ausführungsbeispiel gemäß Fig. 2 umfassen die Auswertemittel 12 einen Spektralteiler 12a für die Laserwellenlänge und die Ramanstreustrahlung, einen Spektralteiler 12b für die Stokes- und die anti-Stokes-Streustrahlung, zwei Filter 12c, 12d sowie zwei Detektoren 12e, 12f für die Stokes- und die anti-Stokes-Streustrahlung. Weiterhin sollen zusätzlich noch ein Messverstärker und eine Auswerteeinheit von den schematisch angedeuteten Auswertemitteln 12 umfasst sein. Weiterhin kann eventuell auch ein Detektor für die Rayleigh-Wellenlänge vorgesehen sein.

Die Linse 8 und der Strahlteiler 7 dienen auch als Auskoppelmittel und können die in der Lichtleitfaser 9 zurück gestreuten Anteile 13 des von der Lichtquelle 5 erzeugten Lichts 6 den Auswertemitteln 12 zuführen. Die Auswertemittel 12 können auch zur Auswertung der zurück gestreuten Anteile 13 der als Superlumineszenzdiode ausgebildeten breitbandigen Lichtquelle 5 dienen, wobei sie insbesondere die Dämpfung bestimmter Stokes- und anti-Stokes-Wellenlängen in der Lichtleitfaser 9, insbesondere ortsaufgelöst, bestimmen können.

Die ortsaufgelöste Bestimmung der Dämpfung bestimmter Stokes- und anti-Stokes-Wellenlängen in der Lichtleitfaser 9 kann dabei durch ein Verfahren erfolgen, dass dem OFDR-Verfahren, wie es in der EP 0 692 705 A1 beschrieben wird, entspricht. Insbesondere kann dabei das Licht 6 der als Superlumineszenzdiode ausgebildeten breitbandigen Lichtquelle 5 frequenzmoduliert und in den Auswertemitteln 12 eine Fouriertransformation durchgeführt werden. Auf Basis dieser Auswertung ist eine Kalibrierung des eigentlichen Temperaturmesssystems möglich.

Mit den Bezugszeichen 14 sind Anteile des Lichts bezeichnet, die nicht zur Kalibrierung oder zur Temperaturmessung beitragen und somit die Verluste erhöhen.

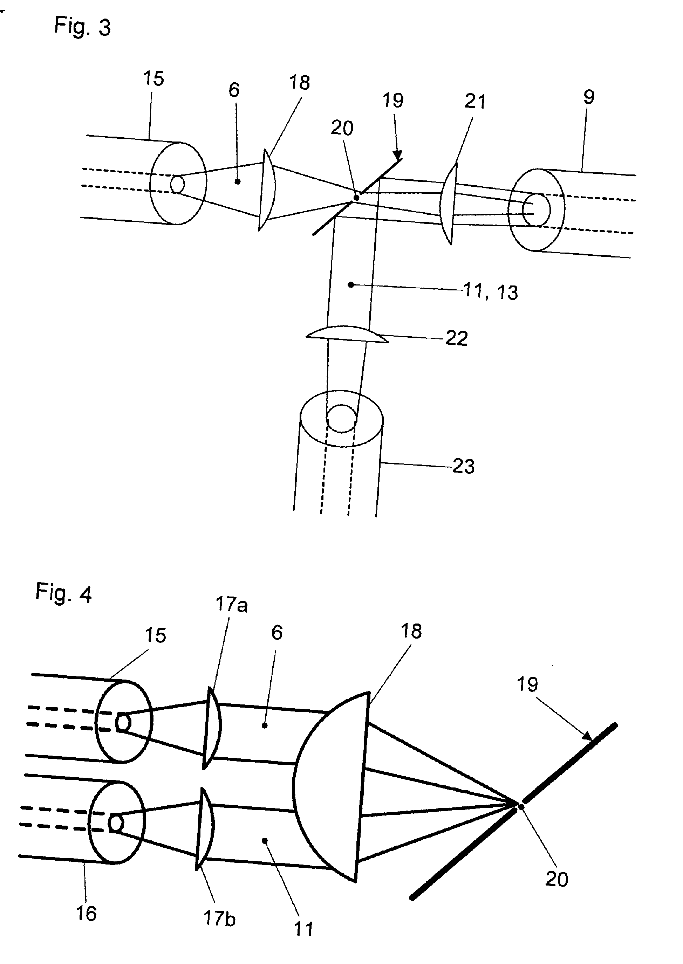

Die aus Fig. 3 und Fig. 4 ersichtlichen Ausführungsformen vermeiden zumindest teilweise derartige Verluste. Alternativ zum Strahlteiler 7 kann - zumindest bei Messsystemen mit Multimode-Sensorfaser - vorteilhaft eine geometrische Kopplung benutzt werden. Die Ausführungsformen gemäß Fig. 3 und Fig. 4 unterscheiden sich dadurch, dass bei der Ausführungsform gemäß Fig. 3 das Licht 6 der als Superlumineszenzdiode ausgebildeten breitbandigen Lichtquelle 5 von links und das Licht 11 des Messlasers 10 von unten zugeführt wird, wohingegen bei der Ausführungsform gemäß Fig. 4 sowohl das Licht 6 Lichtquelle 5, als auch das Licht 11 des Messlasers 10 von links zugeführt wird. Bei Fig. 4 wurde aus Gründen der Übersichtlichkeit auf die Darstellung der rechts und unterhalb der im nachfolgenden beschriebenen geometrische Kopplung angeordneten Teile verzichtet (siehe dazu auch Fig. 3).

Bei der Ausführungsform gemäß Fig. 4 werden sowohl das Licht 11 des Messlasers 10 als auch das Licht 6 der als Superlumineszenzdiode ausgebildeten breitbandigen Lichtquelle 5 zunächst in jeweils eine Single-Mode-Faser 15, 16 eingekoppelt. Die Single-Mode-Fasern 15, 16 weisen typischerweise Faserkerne mit 4 bis 10 µm Durchmesser auf. Die Enden der Faserkerne der Single-Mode-Fasern 15, 16 werden in geeigneter Weise über Linsen 17a, 17b, 18 auf die Rückseite eines speziellen, schräg gestellten, beispielsweise aus beschichtetem Glas bestehenden Spiegels 19 abgebildet. Der Spiegel 19 weist mindestens eine Öffnung 20 oder mindestens einen durchlässige Bereich auf, durch die das Licht 11 des Messlasers 10 und das Licht 6 der Lichtquelle 5 hindurch treten kann.

Die zur Temperaturmessung verwendete Lichtleitfaser 9 des Temperaturmesssystems ist als Multimode-Faser mit einem typischen Kerndurchmesser von 50 µm beziehungsweise 62,5 µm ausgebildet (siehe dazu Fig. 3). Das Ende des Kerns der Lichtleitfaser 9 wird so durch eine Linse 21 auf die Vorderseite des Spiegels 19 abgebildet, dass die numerische Apertur beider Abbildungen in etwa gleich ist. Dann ist das Bild der zur Temperaturmessung verwendeten Lichtleitfaser 9 wesentlich größer als das der Single-Mode-Fasern 15, 16. Von dem Spiegel 19 kann somit der größte Teil der aus der Lichtleitfaser 9 austretenden Anteile 13 des Lichts reflektiert und über eine weitere Linse 22 in eine weitere Lichtleitfaser 23 eingekoppelt werden. Diese weitere Lichtleitfaser 23 kann ebenfalls als Multimode-Faser mit einem typischen Kerndurchmesser von 50 µm beziehungsweise 62,5 µm ausgebildet sein und die zurück gestreuten Anteile 13 den Auswertemitteln 12 zuführen. Anstelle der Einkopplung in die weitere Lichtleitfaser 23 können die an dem Spiegel 19 reflektierten Anteile 13 des Lichts auch direkt den Auswertemitteln 12 zugeführt werden.

Weil der Spiegel 19 im Bereich der Bilder der Single-Mode-Fasern 15, 16 mindestens eine Öffnung 20 aufweist oder für deren Strahlung durchlässig ist, während der übrige Spiegel 19 die Messwellenlängen der Stokes- und antiStokes-Signale reflektiert, ergibt sich eine effiziente Ein- und Auskopplung.

Dabei kann eventuell auch vorgesehen sein, dass der Bereich des Bildes der Single-Mode-Faser 15 für das Licht 11 des Messlasers 10 die Messwellenlängen der Stokes- und antiStokes-Signale reflektiert.

Bei der Ausführungsform gemäß Fig. 3 ist lediglich eine Single-Mode-Faser 15 vorgesehen, durch die lediglich das Licht 6 der als Superlumineszenzdiode ausgebildeten breitbandigen Lichtquelle 5 zugeführt wird. Dagegen wird das Licht 11 des Messlasers 10 von unten durch die Lichtleitfaser 23 oder direkt auf den Spiegel 19 geführt. Auf der von dem Spiegel 19 abgewandten Seite der Lichtleitfaser 23 sind daher Strahlteilermittel vorgesehen, die eine Einkopplung des Lichtes 11 des Messlasers 10 einerseits und eine Auskopplung der auszuwertenden Anteile 13 andererseits ermöglichen.

## Patentansprüche

1. Vorrichtung zur Kalibrierung eines faseroptischen Temperaturmesssystems, umfassend
- eine Lichtquelle (5),
- Einkoppelmittel, die von der Lichtquelle (5) erzeugtes Licht (6) zur Kalibrierung in eine Lichtleitfaser (9) des Temperaturmesssystems einkoppeln können,
- Auskoppelmittel, die in der Lichtleitfaser (9) zurück gestreute Anteile des von der Lichtquelle (5) erzeugten Lichts (6) aus der Lichtleitfaser (9) auskoppeln können,
- Auswertemittel (12), die auf Basis der zurück gestreuten Anteile (13) des Lichts (6) der Lichtquelle (5) eine Kalibrierung des Temperaturmesssystems vornehmen können,
**dadurch gekennzeichnet, dass** die Lichtquelle (5) eine breitbandige Lichtquelle (5) ist.

2. Vorrichtung nach Anspruch 1, **dadurch gekennzeichnet, dass** die Bandbreite des von der Lichtquelle (5) erzeugten Lichts (6) größer als 10 nm, insbesondere größer als 30 nm, vorzugsweise größer als 50 nm, beispielsweise größer als 100 nm ist.

3. Vorrichtung nach einem der Ansprüche 1 oder 2, **dadurch gekennzeichnet, dass** die Lichtquelle (5) eine Superlumineszenzdiode ist.

4. Vorrichtung nach einem der Ansprüche 1 bis 3, **dadurch gekennzeichnet, dass** die Vorrichtung zur Kalibrierung eines Temperaturmesssystems verwendet werden kann, das das Verhältnis der Intensität der Stokes-Streustrahlung (2) zur Intensität der anti-Stokes-Streustrahlung (3) des in die Lichtleitfaser (9) eingekoppelten Lichts (11) eines Messlasers (10) zur Temperaturmessung nutzt.

5. Vorrichtung nach Anspruch 4, **dadurch gekennzeichnet, dass** das von der Lichtquelle (5) erzeugte Licht (6) zumindest Anteile im spektralen Bereich der Stokes- und/oder anti-Stokes-Streustrahlung (2, 3) des in die Lichtleitfaser (9) eingekoppelten Lichts (11) des Messlasers (10) aufweist.

6. Vorrichtung nach einem der Ansprüche 4 oder 5, **dadurch gekennzeichnet, dass** die Bandbreite des von der Lichtquelle erzeugten Lichts mindestens halb so groß wie die Bandbreite der Stokes- und/oder anti-Stokes-Streustrahlung (2, 3) des in die Lichtleitfaser (9) eingekoppelten Lichts (11) des Messlasers (10) ist.

7. Vorrichtung nach einem der Ansprüche 4 bis 6, **dadurch gekennzeichnet, dass** die Bandbreite des von der Lichtquelle erzeugten Lichts mindestens so groß wie, insbesondere größer als, die Bandbreite der Stokes- und/oder anti-Stokes-Streustrahlung (2, 3) des in die Lichtleitfaser (9) eingekoppelten Lichts (11) des Messlasers (10) ist.

8. Vorrichtung nach einem der Ansprüche 1 bis 7, **dadurch gekennzeichnet, dass** die Einkoppelmittel und/oder die Auskoppelmittel als geometrischen Koppelmittel ausgebildet sind und insbesondere einen Spiegel (19) mit einer Öffnung (20) oder einem für das Licht (6) der Lichtquelle (5) zumindest teilweise durchlässigen Bereich aufweisen.

9. Vorrichtung nach einem der Ansprüche 1 bis 7, **dadurch gekennzeichnet, dass** die Einkoppelmittel und/oder die Auskoppelmittel einen Strahlteiler (7) umfassen.

10. Vorrichtung nach einem der Ansprüche 1 bis 7, **dadurch gekennzeichnet, dass** die Einkoppelmittel und/oder die Auskoppelmittel einen optischen Schalter, insbesondere einen Faserschalter umfassen.

11. Vorrichtung nach einem der Ansprüche 1 bis 10, **dadurch gekennzeichnet, dass** die Vorrichtung in das Temperaturmesssystem integriert ist, wobei insbesondere die Auswertemittel (12) diejenigen des Temperaturmesssystems sind.

12. Vorrichtung nach einem der Ansprüche 1 bis 10, **dadurch gekennzeichnet, dass** die Vorrichtung als von dem Temperaturmesssystem separiertes Gerät ausgebildet ist.

13. Verfahren zur Kalibrierung eines faseroptischen Temperaturmesssystems, **gekennzeichnet durch** folgende Verfahrensschritte:
- Erzeugung von breitbandigem Licht (6),
- Einkoppeln des Lichts (6) in eine Lichtleitfaser (9) des Temperaturmesssystems,
- Auskoppeln von in der Lichtleitfaser (9) zurück gestreuten Anteilen (13) des Lichts (6) aus der Lichtleitfaser (9),
- Auswerten der zurück gestreuten Anteile (13) des Lichts (6),
- Kalibrierung des Temperaturmesssystems auf Basis der Auswertung.

14. Verfahren nach Anspruch 13, **dadurch gekennzeichnet, dass** für die Durchführung des Verfahrens eine Vorrichtung nach einem der Ansprüche 1 bis 12 verwendet wird.
